# FASCICULE DE BREVET EUROPEEN

(11) **EP 0 944 512 B1**
(45) Date de publication et mention de la délivrance du brevet: **22.05.2002**
(21) Numéro de dépôt: 97951292.8
(22) Date de dépôt: 10.12.1997
(51) Int. Cl.: B60T 17/08

(54) **CYLINDRES DE FREIN DE SERVICE ET A RESSORTS**
BETRIEBS-UND FEDERBREMSZYLINDER
SERVICE AND SPRING BRAKE CYLINDERS

(30) Priorité: 17.12.1996 FR 9615494
(43) Date de publication de la demande: 29.09.1999
(73) Titulaire: SAB WABCO, 80000 Amiens (FR)
(72) Inventeur: BRUGAIT, Jean-Louis, F-80260 Vaux en Amienois (FR); BEAUVOIS, Damien, F-80136 Rivery (FR); GONCALVES, Claudino, F-60400 Noyon (FR)
(74) Mandataire: Desrousseaux, Grégoire Marie
(86) Numéro de dépôt international: FR9702253
(87) Numéro de publication internationale: WO9826969

(56) Documents cités:
- DE-A- 1 555 531
- US-A- 3 217 611
- US-A- 3 363 519
- US-A- 4 478 319

## Description

La présente invention s'applique à un cylindre de frein combiné à ressorts et de service dont la tige de piston de frein de service est susceptible d'être reliée à une timonerie de freinage par l'intermédiaire d'un régleur de jeu logé au moins en partie dans ladite tige de piston, dont l'extrémité libre opposée au piston de service est susceptible d'être actionnée par la tige de piston à ressorts, reliée au piston à ressorts par une liaison à filetage réversible verrouillée en rotation et susceptible, le cas échéant, d'être déverrouillée.

FR-A-2 492 330 décrit un cylindre de frein à fluide sous pression et à ressort(s) comportant un piston de frein de service actionné par une pression de fluide et un piston de frein à ressort(s) qui est maintenu en position desserrée par une pression de fluide de desserrage et qui est susceptible de transmettre à la tige du piston de frein de service, en aval d'un régleur de timonerie, tout ou partie de l'effort de réaction du ressort.

De tels cylindres de frein mixtes servant au frein de service modérable à fluide et au frein de parc ou d'immobilisation non modérable à ressort(s), présentent l'avantage de faire utiliser par le frein à ressort le régleur de timonerie du frein de service et de permettre de placer manuellement le frein à ressort en position de desserrage (s'il a été serré préalablement) ou en position inactive en agissant par une tirette sur un verrou d'activation. Dans un autre mode de réalisation (FR-A-2 366 967) ce verrou permet de maintenir automatiquement le frein à ressort(s) en position inactive (ce qui supprime le risque de superposition du frein de service et du frein à ressort(s) qui conduit en général à des blocages de roue) et de ne l'activer que lorsqu'on procède à un desserrage d'arniement du frein à ressort(s), réalisé par exemple avec la pression de freinage du frein de service pour éviter un déclenchement intempestif du frein à ressort(s) dont le conducteur ne serait pas informé, notamment en freinage ferroviaire.

Un inconvénient de tels cylindres de frein mixtes réside bien évidement dans leur complexité mécanique et, par voie de conséquence, dans leur coût. Ces deux conséquences négatives sont encore aggravées par le fait que, pour un même diamètre d'alésage du frein de service, des ressorts présentant des forces de réaction différentes sont nécessaires, en fonction des efforts de frein de parc ou d'immobilisation requis, selon que le frein de parc s'applique par exemple à un ou à plusieurs disques de frein d'un essieu et selon que l'on admet ou non, pour le frein d'immobilisation, une adhérence roue-rail à l'arrêt qui est supérieure à l'adhérence maximum utilisable en freinage.

Le système de ressort(s) des cylindres de frein à ressort(s) est en général constitué, pour des raisons de compacité et de coût, par un ressort hélicoïdal unique à plusieurs spires susceptibles de venir en position presque jointives au desserrage total du frein à ressort(s). En conséquence de ce mode de réalisation du ressort unique, lorsque l'on souhaite modifier de façon important la force de réaction élastique, il est en général nécessaire, non seulement de modifier les cales d'appui du ressort, mais aussi de modifier le diamètre du fil cylindrique des spires hélicoïdales, ce qui augmente considérablement le coût d'obtention d'une variante de cylindre de frein à ressort(s).

US-A-4478319 décrit un cylindre de frein comprenant : un cylindre de frein de service dans lequel est monté un piston de frein de service solidaire d'une tige de piston ;un piston annulaire de frein à ressort monté dans un cylindre de frein à ressort et sur la tige de piston au contact de deux ressorts hélicoïdaux concentriques disposés autour d'une tige tubulaire de frein à ressort. Un organe de réglage de jeu est interposé entre la tige de piston et une bielle d'actionnement des freins.

Dans un autre mode de réalisation à plusieurs ressorts hélicoïdaux, USA-3363519 décrit un cylindre de frein à ressorts pour un véhicule, dans lequel plusieurs ressorts hélicoïdaux d'actionnement des freins sont répartis régulièrement autour d'une tige de piston d'actionnement d'un frein.

Par ailleurs, dans le cas déjà mentionné où l'on utilise la pression de freinage et/ou une pression fonction de la pression de freinage (par exemple la pression de la conduite générale de freinage par l'intermédiaire d'un détendeur de pression) pour assurer un desserrage du frein à ressort(s) interdisant la superposition des efforts frein de service-frein d'immobilisation, la section de desserrage pneumatique doit souvent être majorée par rapport à celle du frein de service, ce qui complique la réalisation des cylindres de frein combinés du type "ressort + service".

Il existe ainsi un besoin de diversification et d'augmentation de la puissance de la partie ressort et piston à ressorts des freins à ressort de ce type, utilisés notamment en freinage ferroviaire à air comprimé où les séries de fabrication sont relativement réduites et souvent inférieures à une centaine d'exemplaires.

Un cylindre de frein selon l'invention est décrit à la revendication 1.

Un organe de réglage de jeu est interposé entre la tige de piston de service et une tête de timonerie de freinage. Le piston de frein à ressort est relié axialement à la tige de piston de service par l'intermédiaire d'une liaison à filetage réversible susceptible d'être verrouillée ou déverrouillée en rotation. La surface d'appui des ressorts est ménagée sur un fond annulaire interposé par sa périphérie et indexé en rotation entre le cylindre de service et le cylindre à ressort.

Selon un autre mode de réalisation de l'invention, les ressorts sont des ressorts hélicoïdaux en appui axial et chacun des ressorts de ladite pluralité est disposé à au moins une extrémité dans une cavité de forme générale cylindrique, par exemple ménagée dans le piston à ressort ou autour d'une butée centrale.

Les cavités ménagées dans le piston à ressort sont réparties concentriquement à l'axe du piston à ressort et régulièrement sur un cercle de la périphérie dudit piston à ressort. Au moins une partie de chacun des ressorts hélicoïdaux est constituée par un ressort hélicoïdal principal dans l'espace cylindrique intérieur duquel est logé un ressort hélicoïdal supplémentaire.

Le piston de frein à ressorts contient un nombre N de cavités et un nombre P de ressorts, avec P ≤ N sont alors montés, chacun dans une cavité du piston à ressorts entre le fond de ladite cavité et ladite surface d'appui, selon une disposition telle que la résultante des efforts axiaux de ces ressorts passe sensiblement par l'axe de la tige de piston de service.

Pour un diamètre de piston à ressorts et de service déterminé, le cylindre combiné peut ainsi être constitué par l'assemblage axial modulaire:
- d'un cylindre de frein de service avec son piston et sa tige de piston équipée du régleur de jeu;
- d'un fond annulaire d'appui, sur une face, des ressorts du cylindre à ressorts et, sur l'autre face, d'un ressort de rappel du piston de service, ce fond annulaire étant traversé par la tige de piston de service;
- d'un cylindre de frein à ressort(s), dont le fond est traversé par la tige de piston de service entourée par la tige de piston à ressorts, ce cylindre à ressorts comportant, dans un alésage, un piston à ressorts standard et à étanchéité annulaire pour le fluide de desserrage du frein à ressort(s) agissant sur une face dudit piston à ressorts qui est muni sur l'autre face, dans l'espace annulaire disponible entre les deux zones annulaires d'étanchéité, d'un nombre pair de cavités, de forme générale cylindrique, pour la réception d'au moins une partie d'extrémité d'un ressort hélicoïdal ou de ressorts hélicoïdaux concentriques, ces cavités sensiblement de même forme et de même taille étant réparties régulièrement et concentriquement à l'axe du piston à ressorts;
- d'un nombre pair de ressorts hélicoïdaux principaux, de diamètre extérieur légèrement inférieur à celui des cavités de forme cylindrique, ce nombre pair étant égal ou inférieur au nombre de cavités, chacun de ces ressorts hélicoïdaux étant interposé, par ses extrémités de forme générale annulaire plane, entre le fond de l'une desdites cavités, et un emplacement correspondant d'appui ménagé sur ledit fond annulaire et délimité par au moins une butée latérale;
- d'au moins un moyen d'indexation en rotation entre le piston à ressorts et le fond annulaire, tel qu'une broche traversant simultanément un alésage axial, ménagé dans le fond annulaire, et un alésage borgne conjugué ménagé dans le piston à ressorts, pour l'indexation en rotation des cavités du piston à ressorts et des emplacements correspondant d'appui du fond annulaire; de telle manière que, tous les autres composants restant identiques, l'efforts de réaction des ressorts sur le piston à ressorts puisse être modifié, en modifiant seulement le nombre pair de ressorts hélicoïdaux principaux interposés entre le fond d'une cavité et l'emplacement sur le fond annulaire.

L'utilisation de ressorts, pratiquement standard dans les freins à ressort ferroviaires et l'obtention d'une gamme d'efforts de ressorts en faisant varier le nombre pair de ressorts. permettent d'obtenir toute une série d'avantages. Tout d'abord, l'effort de réaction maximal possible pour le frein à ressort(s) est majoré, car on peut loger nettement plus d'acier à ressort dans l'espace annulaire disponible pour les ressorts que lorsqu'on utilisait un ressort hélicoïdal unique.

On notera également qu'un nombre pair de ressorts hélicoïdaux principaux peuvent être équipés d'un ressort hélicoïdal supplémentaire monté à l'intérieur du ressort hélicoïdal principal, et interposé entre le fond de la cavité correspondante et l'emplacement correspondant d'appui ménagé sur le fond annulaire, de manière à modifier de façon supplémentaire l'effort de réaction total des ressorts sur le piston à ressorts, ainsi que la variation de cet effort de réaction en fonction de la course du piston à ressorts, L'espace intérieur est en effet complètement libre pour loger un ressort hélicoïdal supplémentaire, plus souple que le ressort principal, et donc présentant une force de réaction plus réduite, mais dont l'effort de réaction se réduit moins vite en fonction de la courbe de détente. Rien n'interdit bien sûr (sauf l'efficacité comparée à la complexité et au coût de montage) de monter un troisième ressort hélicoïdal à l'intérieur du ressort hélicoïdal supplémentaire.

Parmi les avantages procurés par la structure à plusieurs ressorts hélicoïdaux principaux répartis régulièrement, on notera la suppression du couple de torsion exercé sur le piston à ressorts, au cours de la détente ou de la compression du ressort, cette suppression facilitant l'indexation angulaire du piston à ressorts. Un des avantages les plus nets parait cependant résider dans le fait qu'il est alors possible de prévoir un calibrage particulièrement soigné et précis du ressort hélicoïdal standard fabriqué en beaucoup plus grand nombre. Les ressorts ainsi calibrés peuvent alors présenter à l'état libre pratiquement tous la même hauteur et fournir, à l'état comprimé, la même force de réaction à l'intérieur d'une fourchette de variation étroitement délimitée. Il n'est ainsi plus nécessaire de prévoir des cales de réglages du tarage entre le ressort et son appui sur le piston à ressorts et/ou sur le fond annulaire d'appui. Le bilan global du coût d'approvisionnement et de montage apparaît nettement favorable, car plusieurs ressorts hélicoïdaux standard (jusqu'à 10 pour le cylindre dans l'exemple proposé) sont moins onéreux qu'un ressort hélicoïdal de grande dimension, qui doit être roulé à chaud et trempé avec le plus grand soin. Un autre avantage pourrait résider dans le fait que plusieurs ressorts fabriqués en série et bien contrôlés risquent moins la rupture qu'un ressort unique, à puissance égale. De plus. en cas de rupture d'un ressort de la série qui est répartie sur le piston, l'effort d'immobilisation du frein à ressort(s) ne disparaît pas complètement comme c'est le cas avec un ressort unique.

Selon un autre mode de réalisation de l'invention, pour un diamètre d'étanchéité des pistons nettement supérieur au diamètre du piston à ressorts standard, le cylindre de frein de service, le fond annulaire, le cylindre de frein à ressort(s) et son piston, sont adaptés au diamètre d'étanchéité nettement supérieur, mais le piston à ressorts est muni d'un nombre pair de cavités cylindriques standard, supérieur au nombre pair de cavités prévues dans le piston à ressorts standard, des emplacements d'appui correspondants sont ménagés sur le fond annulaire et des ressorts hélicoïdaux principaux et, le cas échéant, supplémentaires standard sont interposés en nombre pair, chacun entre le fond d'une cavité et l'emplacement d'appui correspondant sur le fond annulaire.

Selon encore un autre mode de réalisation de l'invention. en position de desserrage du frein à ressort(s), le piston à ressorts est vissé sur le filetage réversible de la tige de piston à ressort(s), au moins en partie dans la zone axiale comprise entre le piston de frein de service et les emplacements d'appui des ressorts hélicoïdaux sur le fond annulaire d'appui, de manière à améliorer le centrage des efforts de réaction résultants sur la tige de piston à ressorts.

Selon un mode de réalisation avantageux de l'invention, le piston à ressorts standard comporte dix cavités cylindriques de réception de ressorts, et le fond annulaire, dix emplacements correspondants d'appui délimités par au moins une butée latérale, et les ressorts hélicoïdaux sont agencés à raison de dix ou de cinq ressorts hélicoïdaux standard. répartis régulièrement, ou bien à raison de deux, ou de quatre, ou de six, ou de huit ressorts hélicoïdaux standard, répartis symétriquement par rapport à un plan passant par l'axe ou le centre du piston, et en fait symétriquement par rapport à deux plans orthogonaux.

Le cylindre de frein combiné selon l'invention comporte un cylindre supplémentaire de desserrage du frein à ressort(s), équipé d'un piston supplémentaire annulaire de desserrage, dont la tige de piston de desserrage est logée mobile de façon étanche, sous la forme d'un manchon annulaire entre le fond du cylindre à ressorts et la tige de piston à ressorts, pour venir en appui annulaire sur le piston annulaire à ressorts principal (standard), sous l'effet d'une pression de desserrage agissant sur le piston supplémentaire de desserrage. Le cylindre supplémentaire de desserrage peut présenter à sa périphérie des trous filetés axiaux d'assemblage, tandis que le cylindre à ressorts et le cylindre de frein de service présentent à leur périphérie des trous de passage axiaux correspondants aux trous tiletés axiaux d'assemblage, et dans chacun desquels est monté une vis d'assemblage axial des trois cylindres, vissée dans l'un desdits trous filetés d'assemblage, et en appui sur la périphérie, du côté extérieur, du trou de passage axial du cylindre de frein de service.

Le procédé selon l'invention de réglage de la force de réaction des ressorts d'un cylindre de frein utilise un piston à ressorts standard muni d'un nombre N standard de cavités sensiblement cylindriques de réception de ressort(s) et l'on dispose dans P cavités. avec P ≤ N, un ressort hélicoïdal standard comprimé entre le fond de la cavité et une surface d'appui solidaire de l'ensemble de cylindre de frein, les ressorts hélicoïdaux étant disposés de telle façon que la résultante des efforts de réaction de ces ressorts passe sensiblement par l'axe de la tige de piston de service, le nombre P de ressorts étant choisi de manière à assurer la force de réaction la plus proche de la force de réaction souhaitée en service.

Ce procédé de réglage utilise en outre, pour au moins une partie des ressorts, un ressort hélicoïdal principal dans l'espace cylindrique intérieur duquel est logé un ressort hélicoïdal supplémentaire, ou bien pour des paires de ressorts disposées symétriquement, par rapport à l'axe du piston à ressorts deux ressorts standard mais différents par leur force de réaction d'une paire de ressorts ainsi déposée symétriquement à une autre paire de ressorts disposée symétriquement pour une même course de compression, de manière à augmenter encore la gamme des efforts de réaction disponibles pour le frein à ressorts.

D'autres buts, avantages et caractéristiques apparaîtront à la lecture de la description de plusieurs modes de réalisation de l'invention, faite à titre non limitatif et en regard du dessin annexé, dans lequel:

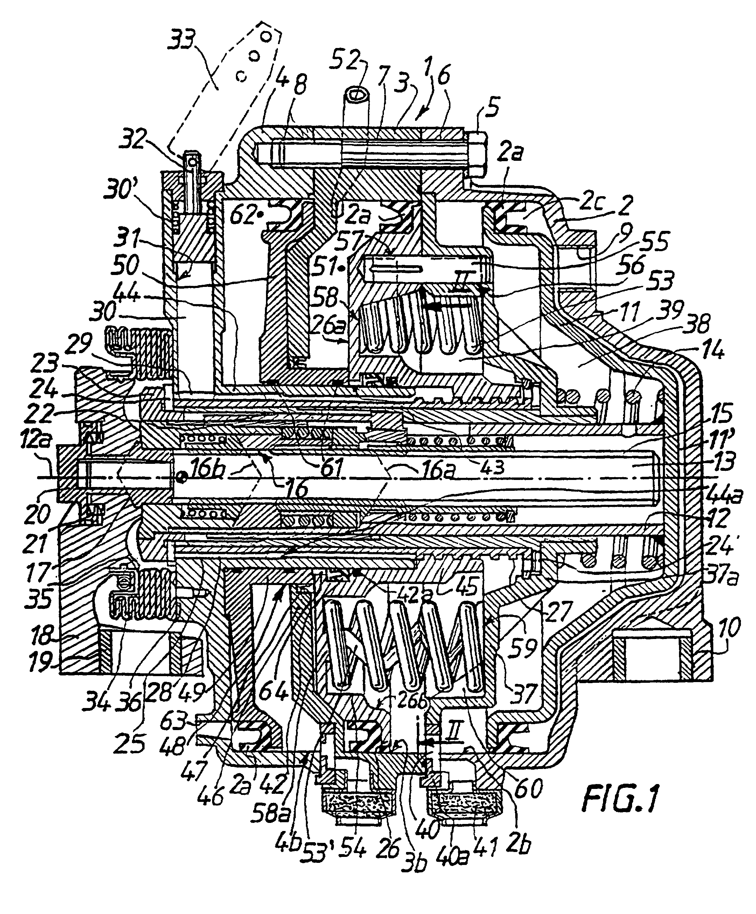

- la figure 1 est une vue en coupe longitudinale selon l'axe du cylindre, d'un cylindre de frein de service et à ressorts selon l'invention, les moitiés supérieure et inférieure passant par des plans de coupe différents, pour mieux faire apparaître certains détails;

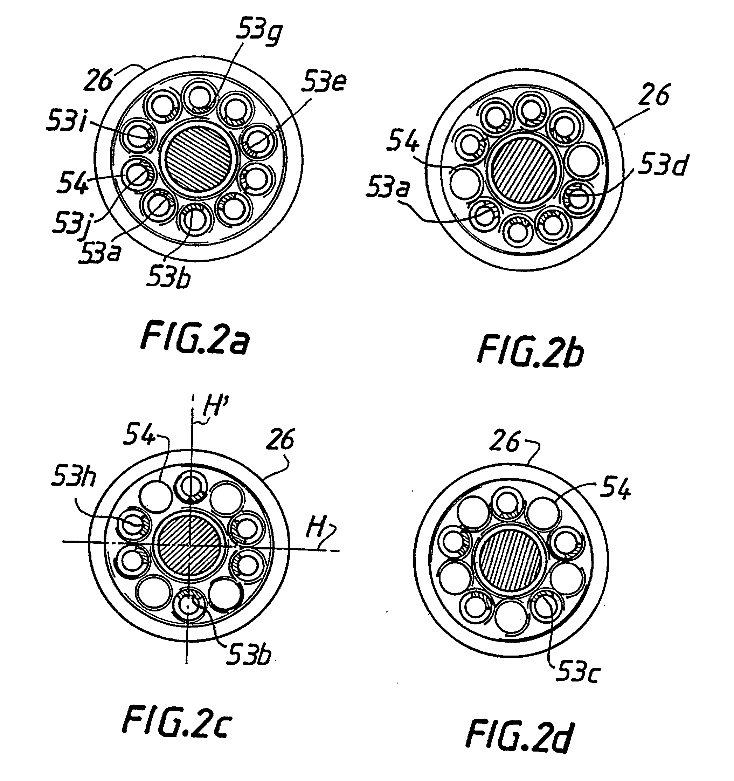

- les figures 2a à 2d sont des vues frontales partiellement schématiques et à échelle réduite, selon la ligne II-II à la figure 1, du piston de frein à ressort(s) du cylindre de frein représenté à la figure 1, avec des configurations respectives à 10, à 8, à 6 et à 5 ressorts, répartis sur une circonférence périphérique du piston de frein à ressorts.

En se reportant à la figure 1, on voit que le cylindre de frein de service et à ressorts 1, destiné au freinage ferroviaire, est constitué par l'empilage et l'assemblage coaxial de plusieurs cylindres, respectivement de service 2, à ressorts principal 3, à ressorts auxiliaire 4, qui sont chacun réalisés ici par une pièce de fonderie monobloc en forme générale de coupe à fond fermé (cylindre de service 2) ou ouverte au centre. Chacun des cylindres présente ici un alésage 2b, 3b, 4b de même diamètre, pour recevoir un piston, et les garnitures d'étanchéité pneumatiques extérieures à lèvres 2a des pistons sont avantageusement identiques, pour des raisons de standardisation des approvisionnements.

Comme on le voit sur la moitié supérieure de la vue en coupe de la figure 1, les trois cylindres sont assemblés axialement par une couronne de vis 5 qui, chacune, traversent un trou de passage axial 6 ménagé dans la partie périphérique du cylindre de service 2, un trou de passage axial 7 ménagé dans la périphérie du cylindre à ressorts principal 3, et qui viennent se visser dans un trou fileté 8 ménagé dans la partie périphérique du cylindre à ressorts auxiliaire 4. Les vis 5 assurent ainsi le serrage d'assemblage axial des trois cylindres 2, 3, 4 entre la tête de vis en appui sur la périphérie du trou 5 et l'alésage fileté 8.

Le cylindre de frein de service 2, dont le corps présente, respectivement, un alésage fileté de raccord 9 d'alimentation en air comprimé et d'échappement de l'air comprimé ainsi que deux alésages manchonnés 10 (un seul est visible sur la moitié inférieure de la figure) de raccordement à une timonerie de freinage (par exemple à des leviers d'actionnement de pinces de freins à disque), comporte un piston de service 11, à saillie centrale 11' dont la forme est conjuguée de celle de la paroi intérieure du cylindre 2. La saillie centrale 11' permet d'avancer jusqu'au niveau des alésages manchonnés 10 la tige de piston de service 12 pour qu'elle loge une vis de rattrapage de jeu 13 de plus grande longueur, en décalant le ressort de rappel 14 du piston de frein de service par rapport au filetage réversible de la tige de piston à ressort.

La vis de rattrapage de jeu 13, montée coaxialement à la tige de piston 12 d'axe 12a, comporte à sa périphérie un filetage réversible 15 sur lequel est vissé de façon connue un régleur de jeu désigné dans son ensemble par la référence 16, et qui ne sera pas décrit en détail ici. Le régleur de jeu 16 est en fait interposé mécaniquement entre la tige de piston de frein de service 12 et la vis de rattrapage de jeu 13 à filetage réversible qui est elle-même en appui rigide, par l'intermédiaire du crabotage 17 débrayable manuellement, sur une tête de timonerie 18 (tête marteau) portant deux alésages manchonnés 19 (un seul est représenté sur la demi-vue inférieure de la figure 1) de liaison à une timonerie de freinage. Une tête de réglage manuel 20, repoussée en position de verrouillage du crabotage 17 par un ressort axial à rondelles Belleville 21 permet, en introduisant une clé à six-pans creux sur la tête 20 et en appuyant sur cette tête 20 à l'encontre du crabotage 17, de déverrouiller ce dernier et de faire tourner manuellement la vis de rattrapage 13, pour procéder au réglage manuel du jeu, par exemple avant et après un changement de garniture ou semelle de friction.

La tige de piston 12 du frein de service est reliée, de façon réglable en atelier, par un filetage 22 à une couronne 23 d'appui, par l'intermédiaire d'une butée à aiguilles 24, d'une tige de piston de frein à ressorts 25, qui est reliée au piston de frein à ressort 26, par l'intermédiaire d'un filetage réversible 27, par exemple un filet à section trapézoïdale, comme représenté. Du côté de la butée à aiguilles 24 qui est opposé au filetage réversible 27, sont prévues des nervures axiales 28 à section à flanc raide d'un côté et en pente douce de l'autre côté. Ces nervures 28 coopèrent avec la dent à flanc raide 29 d'un cliquet 30, repoussé par un ressort de rappel 30' dans un alésage de guidage 31. au contact des nervures 28. Même lorsqu'une force de poussée tangentielle importante est exercée par une nervure 28 sur la dent 29, il est encore possible de retirer manuellement le cliquet 30 à l'encontre du ressort 30', en exerçant un effet de levier sur une tirette centrale 32, à l'aide d'un levier basculant 33, comme représenté en tirets, à la figure 1. Dans certaines applications, la tirette 32 peut être reliée à un piston pneumatique ou hydraulique d'actionnement du cliquet 30, par exemple de la façon représentée dans FR-A-2 366 967.

Sur la figure 1, la tige filetée 13 de rattrapage de jeu est représentée en position complètement rentrée à l'intérieur de la tige de piston de frein de service 12. mais lorsque le jeu de la timonerie de freinage s'accroît, notamment par suite de l'usure progressive des garnitures de friction et des pistes de friction, la tige filetée 13 va se déplacer vers l'extérieur, c'est-à-dire vers la gauche de la figure 1, par rapport au régleur de jeu à filetage réversible 16, par une succession de déverrouillages et d'avances au niveau des lignes de verrouillage 16a et 16b. Pour assurer l'étanchéité à l'égard de l'eau et des salissures du système à ressorts 24, 25, 27, 28, 29, 30 et de tous les éléments de réglage de jeu 13, 16, un soufflet élastique en élastomère 34 est interposé entre une couronne interne 35 à rainure d'étanchéité de la tête de timonerie 18, et une face frontale d'étanchéité 36, ménagée extérieurement sur le cylindre à ressort auxiliaire 4, autour de la sortie de la tige de piston à ressorts 25, le soufflet 34 étant retenu fermement en position par un collier de serrage sur la couronne 35, et par une couronne de vis sur la face frontale 36. Lorsque la vis de rattrapage 13 sera sortie au maximum vers l'extérieur, les plis du soufflet 34 seront dépliés pour continuer à assurer l'étanchéité de l'ensemble du régleur de jeu et du système de liaison rotative et à cliquet entre la tige de piston de frein de service 12 et le piston de frein à ressorts 26.

Le cylindre de service 2 et le cylindre à ressorts principal 3 sont séparés par une cloison ou fond annulaire 37 d'appui de ressorts. Le fond 37 est, par exemple, pincé axialement et verrouillé en rotation entre les deux corps de cylindres 2 et 3 et il sépare une chambre de respiration de cylindre de service 38 d'une chambre de respiration 39 de cylindre à ressorts. Les deux chambres de respiration 38 et 39 sont reliées entre elles par un passage latéral 40 (ménagé dans une pièce 40a d'indexation en rotation du fond annulaire 37 par rapport au cylindre de service 2) et à l'atmosphère par un filtre 41. Le fond annulaire 37 est traversé par la tige de piston de frein de service 12, et présente une partie centrale 37a en saillie dans la direction de la saillie centrale 11' du piston de service 11. Dans la chambre de respiration 38, le ressort de rappel 14 du piston de service s'appuie sur la partie centrale 37a, tandis que dans la chambre de respiration 39, une butée à aiguilles 24' est interposée entre la tige de piston à ressorts 25 et cette partie en saillie 37a.

Le piston à ressorts 26, remplissant ici le rôle de piston à ressorts principal, est logé mobile axialement de façon étanche dans l'alésage 3a, avec lequel il coopère par l'intermédiaire de la garniture annulaire d'étanchéité à lèvres 2a. L'étanchéité intérieure du piston à ressorts 26 est assurée ici par un joint à lèvres 42 assisté d'un joint torique 42a qui se déplacent de façon étanche au contact de la surface cylindrique extérieure d'un manchon 44 solidaire du cylindre à ressorts auxiliaire 4, et dont un alésage intérieur 44a sert de guidage à la tige de piston à ressorts 25 dans la zone des nervures axiales 28.

Le piston à ressorts principal 26 présente, au-delà des joints intérieurs 42 et 42a, un prolongement annulaire central axial 45 muni du filetage intérieur ou taraudage réversible, coopérant avec le filetage extérieur réversible 27 de la tige de piston à ressorts 25. Le cylindre de frein à ressorts principal 3 présente une cloison intérieure 46, formant fond de cylindre et munie au voisinage d'un passage central, d'un joint annulaire d'étanchéité à lèvres 47 qui coopère avec la surface cylindrique extérieure 48 d'un manchon 49 solidaire du piston supplémentaire 50 de desserrage du frein à ressorts. Entre la cloison intérieure 46 et le piston à ressorts 26, est délimitée une chambre principale 51 de desserrage du frein à ressorts, qui est reliée par un raccord 52 à une source d'air comprimé de desserrage du frein à ressorts, agissant sur la face 26a du piston à ressorts, à l'encontre d'une série de ressorts 53, en appui sur l'autre face 26b du piston à ressorts.

Les ressorts 53 qui peuvent être au nombre de dix selon le mode de réalisation proposé, sont désignés 53a, 53b...53i, 53j et sont soit répartis régulièrement (cas des figures 2a et 2d), soit répartis symétriquement par rapport à un plan passant par le centre ou l'axe du piston. Pour cela, le piston à ressorts principal 26 comporte, du côté de sa face 26b, un nombre pair de cavités 54, dans le mode de réalisation préféré dix cavités 54, de forme générale cylindrique, et aptes à loger une partie d'extrémité des ressorts hélicoïdaux 53, qui peuvent comporter chacun intérieurement un autre ressort hélicoïdal (voir le ressort intérieur 53' sur la moitié inférieure de la figure 1) de diamètre extérieur inférieur au diamètre intérieur du ressort hélicoïdal 53 et, le cas échéant, de pas inverse et de hauteur détendue différente de celle du ressort 53. Les cavités 54 présentent sensiblement toutes la même taille en diamètre et en longueur (de légères différences peuvent exister du fait de la présence des alésages d'indexation), et sont réparties régulièrement et concentriquement à l'axe du piston à ressorts, dans l'espace disponible entre le prolongement 45 et le logement de la garniture d'étanchéité extérieure 2a.

Le cylindre à ressorts principal 26 est indexé en rotation par rapport à la cloison de séparation 37 et donc au corps assemblé du cylindre de frein combiné 1, à l'aide d'au moins une broche 55 qui traverse un alésage axial 56 ménagé dans le fond annulaire 37 et vient se loger dans un alésage borgne 57 du piston principal à ressort 26. L'indexation en rotation, qui est de préférence réalisée avec plusieurs broches 55 alors qu'une seule de ces broches est représentée, est nécessaire même lorsque les ressorts hélicoïdaux 53 n'exercent pas de couple sur le piston 26, car le filetage réversible 27 de la tige de piston à ressorts 25 bloquée en rotation par la dent 29 du cliquet 30, exerce un couple de réaction important sur le taraudage du manchon 45.

Chacun des ressorts hélicoïdaux principaux 53 est interposé entre le fond 58 d'une cavité 54 et un emplacement correspondant 59 d'appui, ménagé sur le fond annulaire 37, et délimité par au moins une butée latérale 60, et il se trouve ainsi automatiquement réparti régulièrement et concentriquement par rapport à l'axe du piston à ressorts 26. Les ressorts hélicoïdaux supplémentaires 53', logés à l'intérieur des ressorts hélicoïdaux principaux 53, peuvent être montés libres à l'intérieur des ressorts hélicoïdaux principaux mais, de préférence, des butées centrales de faible hauteur 58a sont prévues sur le fond 58 des cavités 54 et, respectivement, sur les emplacements d'appui 59, afin d'éviter tout contact entre le ressort hélicoïdal supplémentaire 53' et le ressort hélicoïdal principal 53 qui l'entoure. On remarquera que les solutions de cylindre de frein à ressort à un seul ressort hélicoïdal ne permettent en général pas de loger un ressort hélicoïdal supplémentaire à l'intérieur du ressort principal.

Le cylindre à ressort auxiliaire 4, qui fait fonction de cylindre supplémentaire de desserrage du frein à ressort, porte dans l'alésage 31 le cliquet 30 de desserrage manuel du frein à ressort et guide de façon étanche le piston supplémentaire de desserrage 50 dans l'alésage 4b. Le piston 50 est également guidé de façon étanche sur la surface cylindrique extérieure du manchon 44, à l'aide de deux garnitures d'étanchéité à joints toriques 61 (ou à joint de section carrée ou rectangulaire). Entre le piston supplémentaire de desserrage 50 et la paroi frontale du cylindre supplémentaire 4 est ainsi délimitée une chambre supplémentaire de desserrage 62, de forme annulaire et de même section que la chambre principale de desserrage 51, et qui est reliée à une source d'alimentation en air comprimé de desserrage par un raccord 63.

Comme on le voit sur les figures 2a à 2d, la solution de l'invention avec un piston principal 26 à plusieurs ressorts répartis concentriquement ou symétriquement, permet une grande variété de combinaisons.

Selon la disposition de la figure 2a, toutes les dix cavités 54 sont munies d'un ressort hélicoïdal 53, et l'on obtient l'effort de réaction maximal pour le frein à ressort. Selon la disposition de la figure 2b, on enlève les ressorts 53 dans deux cavités opposées 54, et on obtient une disposition à huit ressorts, symétrique par rapport à un plan passant par le centre du piston 26. Selon la disposition de la figure 2c, six ressorts 53 sont disposés symétriquement par rapport à un plan passant par le centre du cylindre. En inversant la disposition, c'est-à-dire en enlevant les six ressorts et en plaçant quatre ressorts dans les cavités 54 représentées vides sur la figure 2c, on obtient une disposition à quatre ressorts seulement, et présentant une bonne symétrie par rapport à un plan passant par le centre ou l'axe du cylindre 26. Sur la figure 2d, on a représenté la solution à cinq ressorts 53, qui sont alors régulièrement répartis à raison d'une cavité 54 vide suivie d'une cavité 54 munie d'un ressort 53. On pourrait aussi ne placer que deux ressorts diamétralement opposés. Par simple choix au montage, on peut ainsi disposer d'un frein à ressort dont la puissance s'étale de deux à dix ressorts (2, 4, 5, 6, 8, 10) et dont la force de desserrage peut être modulée en utilisant un seul ou deux pistons de desserrage 26, 50. On peut aussi, pour moduler la puissance des ressorts, munir un certain nombre de paires de ressorts symétriques d'un ressort supplémentaire intérieur 53'.

Selon une disposition plus générale, on constate que pour faire passer la force de réaction résultante des ressorts hélicoïdaux 53 sensiblement par l'axe 12a de la tige de piston 12 il suffit que les ressorts soient disposés symétriquement par rapport à deux plans orthogonaux (indiqués H et H' sur la figure 2c). Des solutions à six, douze et quinze cavités 54 sont aussi possibles qui permettent de disposer d'un grand nombre de combinaisons de ressorts 53 disposés en nombre pair ou impair, selon une succession très progresive. Douze cavités permettent ainsi de réaliser des combinaisons à 2, 4, 6, 8, 10 et 12 ressorts et 15 cavités permettent des combinaisons à 3, 5, 6, 9, 10, 12, 15 ressorts. Des ressorts hélicoïdaux même identiques et bien calibrés présentent toujours de légères différences de force de réaction lorsqu'on les soumet à un écrasement important, et la force de réaction résultante ne passera jamais exactement par l'axe 12a de la tige de piston 12, mais un léger décalage de la force de réaction résultante sera sans effet sur le fonctionnement du cylindre à ressorts qui peut également supporter de légers décalages de la concentricité et de la régularité de la répartition des cavités 54, tels qu'il peut s'en produire sur des pièces brutes de fonderie.

Le cylindre de frein combiné selon l'invention fonctionne de la façon décrite ci-après. En situation de marche normale du véhicule équipé du cylindre combiné selon l'invention, les raccords 52 et 63 sont reliés à une source d'air comprimé de desserrage, par exemple l'air comprimé de la conduite générale de freinage d'un véhicule ferroviaire, tel qu'un train, et le raccord 9 est relié à la valve de freinage du véhicule.

Sous l'effet de la pression de desserrage régnant dans les chambres 51 et 62, le piston à ressorts 26 est repoussé vers la droite de la figure 1 par la pression régnant dans la chambre principale 51 et par la poussée du piston supplémentaire 50 transmise par le manchon 49 qui vient en appui annulaire sur un rebord intérieur 64 du piston à ressorts 26. Le piston à ressorts 26 et le piston supplémentaire 50 occupent ainsi la position de butée en desserrage complet représentée sur la moitié supérieure de la figure 1.

Lorsqu'un freinage de service est déclenché, la chambre de frein de service 2c est alimentée en air comprimé par le raccord 9, et le piston de service 11 est déplacé vers la gauche de la figure 1, avec la tige de piston 12 qui verrouille et entraîne le régleur de jeu 16 et la vis de rattrapage de jeu 13 qui déplace vers la gauche de la figure 1 la tête de timonerie (tête marteau) 18, ce qui provoque le serrage des freins par déplacement relatif des alésages manchonnés 10 et 19, reliés à des leviers de frein.

A l'échappement de la pression régnant dans la chambre de frein de service 2c, le piston de frein de service 11 revient dans la position de desserrage représentée sur la figure 1. A la suite des freinages de service successifs, la vis de rattrapage de jeu 13 se déplace par rapport au régleur 16 en direction de la gauche de la figure 1, sans tourner car elle est verrouillée en rotation par rapport à la tige de timonerie 18 par le crabotage 17. La tête de timonerie 18 se déplace ainsi progressivement vers la gauche, en restant reliée (de façon étanche aux salissures) au cylindre supplémentaire 4 par l'intermédiaire du soufflet élastique 34.

La couronne d'appui 23 reste par contre reliée rigidement à la tige de piston de frein de service 12, et la butée à aiguilles 24 est en appui sur cette couronne 23. Si l'on déclenche le frein à ressort par mise à l'échappement des raccords 52 et 63, par exemple pour réaliser une longue immobilisation du véhicule, le piston à ressorts 26, repoussé par les ressorts 53 et 53', exerce une traction sur le manchon 45 qui est vissé sur le filetage 27 de la tige de piston à ressorts 25 bloquée en rotation par le cliquet 30. La tige de piston 25 se déplace en conséquence vers la gauche de la figure 1 et les nervures 28 glissent au contact du cliquet 30. La butée à billes 24, sur laquelle s'appuie la tige de piston à ressorts 25, entraîne vers la gauche de la figure 1 la couronne d'appui 23 et la tige de piston de frein de service 12 qui lui est solidaire. La tige de piston 12 entraîne à son tour vers la gauche de la figure 1 la tête de timonerie 18 par l'intermédiaire du régleur de jeu 16, ce qui provoque le serrage des freins. Comme on le voit, le frein à ressort utilise le réglage du régleur de jeu 16, ce qui permet d'assurer le serrage des freins avec de faibles courses du ressort. Normalement, le piston à ressorts 26 est immobilisé en position de serrage des freins avant de venir en butée, soit sur le fond de la cloison intérieur 46, soit indirectement, par butée du piston supplémentaire 50 sur le fond du cylindre auxiliaire 4, dans les positions représentées sur la moitié inférieure de la figure 1. Le desserrage du frein à ressort peut s'effectuer en remettant les chambres de desserrage de ressorts 51 et 62 sous pression, ce qui ramène les éléments du cylindre combiné dans la position représentée à la moitié supérieure de la figure 1.

Si l'air comprimé de desserrage n'est pas disponible, et s'il est néanmoins nécessaire de desserrer le frein à ressort on peut, en exerçant une traction à effet de pivotement sur le levier 33, provoquer un effet de traction important sur le cliquet 30, à l'encontre du ressort de rappel 30' et des forces de friction entre la dent 29 et la nervure 28, ce qui libère la tige de piston à ressorts 25 en rotation avec de faibles frottements, grâce aux butées à roulement 24 et 24'. Sous l'effet de la poussée exercée par les ressorts 53 vers la gauche de la figure 1, le piston à ressorts 26 se déplace vers la gauche en faisant tourner la tige de piston 25 dont le filetage extérieur réversible 27 se dévisse dans le taraudage du manchon 45. Nous rappelons que le piston à ressorts 26 est verrouillé en rotation par les moyens d'indexation en rotation (broche 55 logée dans les alésages 56 et 57). Les pistons à ressort 26 et 50 viennent alors occuper la position représentée sur la moitié inférieure de la figure 1, tandis que sous l'effet de la force de réaction de la timonerie de freinage, la couronne d'appui 23 reliée à la tige de piston de service 12, elle-même reliée par le régleur de jeu 16 à la vis de rattrapage 13 et à la tête de timonerie 18, repousse la tige de piston à ressorts 25 vers la droite avec dévissage du filetage réversible 27 dans le manchon 45 immobilisé en rotation par les moyens d'indexation 55, 56, 57 et immobilisé axialement par l'appui en butée des pistons à ressorts 26, 50, sous la poussée des ressorts 53.

On revient donc dans la position de frein desserré, telle que représentée sur la moitié inférieure de la figure 1. Après un desserrage manuel du frein à ressort, si l'on remet en pression de desserrage les chambres 51 et 62, le piston à ressorts 26 se déplace vers la droite en faisant tourner la tige de piston 25 dans le sens inverse, c'est-à-dire dans le sens où le cliquet 30 n'est pas actif pour bloquer la rotation du rochet constitué par les nervures axiales 28, et ceci jusqu'à la position de butée représentée sur la moitié supérieure de la figure 1.

Selon un autre mode de fonctionnement interdisant en principe la superposition du frein à ressort et du frein de service, la tirette centrale 32 est reliée, comme indiqué précédemment, à un piston de déverrouillage susceptible d'être actionné en déverrouillage par une pression de fluide constituée par exemple par la pression de la conduite générale de freinage d'un train. Sous l'action des ressorts 53, les pistons à ressorts principal 26 et supplémentaire 50 font tourner la tige de piston à ressorts 25 qui n'est plus verrouillée et ils sont donc repoussés vers la gauche de la figure 1, dans la position de butée représentée sur la moitié inférieure de la figure 1. Les freinages de service se déroulent normalement comme indiqué précédemment, la couronne d'appui 23 et la butée à aiguilles 24 se détachant, à chaque actionnement du frein de service, de l'extrémité de la tige de piston à ressorts 25. Dans le cas d'un freinage de parc ou d'immobilisation, le frein de service actionne d'abord le piston de service 11. Ensuite, du fait de la mise en immobilisation ou en stationnement, le piston de déverrouillage libère la tirette 32, ce qui ramène le cliquet 30 dans la position de verrouillage représentée sur la moitié supérieure de la figure 1. Dans le même temps, les chambres de desserrage de frein à ressorts 51 et 62 sont alimentées par une pression de desserrage qui est fonction de la pression de freinage ou égale à la pression de freinage régnant dans la chambre de frein de service 2c. Le frein à ressort est ainsi armé, et il se déclenchera seulement si la pression de frein de service diminue ou disparaît, l'effet total du frein de service et du frein à ressort restant sensiblement constant au cours du desserrage progressif du frein de service dû, par exemple, à une fuite de la garniture d'étanchéité 2a du frein de service. Dans ce mode de fonctionnement, le frein à ressort se substitue ainsi automatiquement et progressivement au frein de service en cas de défaillance de ce dernier.

Bien entendu, la présente invention n'est pas limitée aux modes de réalisation décrits et représentés, mais elle est susceptible de nombreuses variantes accessibles à l'homme de l'art sans que l'on ne s'écarte de l'invention, dans les limites définies par les revendications.

## Revendications

1. Cylindre de frein comprenant:
- un cylindre de frein de service (2),
- un piston de frein de service (11) monté dans le cylindre de service (2) et solidaire d'une tige de piston de service (12),
- un cylindre de frein à ressort (3) monté coaxialement sur le cylindre de frein de service (2), et permettant le desserrage du frein à ressorts,
- un piston annulaire de frein à ressort (26) monté dans le cylindre à ressort (3) et sur la tige de piston de service (12), pour transmettre à cette dernière un effort de freinage à ressort,
- une pluralité de ressorts (53) disposés autour de ladite tige de piston de service (12), entre le piston à ressort (3) et une surface d'appui (59) solidaire de l'ensemble (1) formé du cylindre de frein de service (2) et du cylindre de frein à ressort (3) assemblés coaxialement, **caractérisé en ce qu'**il comporte un cylindre supplémentaire (4) de desserrage de frein à ressort, équipé d'un piston supplémentaire annulaire (50) de desserrage, dont la tige de piston de desserrage est logée mobile de façon étanche, sous la forme d'un manchon annulaire (49) entre le fond (46) du cylindre à ressorts (3) et la tige de piston à ressorts (25), pour venir en appui annulaire sur le piston annulaire à ressorts principal (26), sous l'effet d'une pression de desserrage agissant sur le piston supplémentaire de desserrage (50).

2. Cylindre de frein selon la revendication 1, **caractérisé en ce que** le cylindre supplémentaire de desserrage (4) comporte à sa périphérie des trous filetés axiaux (8) d'assemblage, tandis que le cylindre à ressorts (3) et le cylindre de frein de service (2) présentent à leur périphérie des trous de passage axiaux (7, 6) correspondant aux trous filetés axiaux d'assemblage (8) et dans chacun desquels est montée une vis (5) d'assemblage axial des trois cylindres (2, 3, 4), vissée dans l'un desdits trous filetés d'assemblage (8) et en appui sur la périphérie du côté extérieur du trou de passage axial (6) du cylindre de frein de service (2)

3. Cylindre de frein selon la revendication 1 ou 2, **caractérisé en ce qu'**un organe de réglage de jeu (16, 13) est interposé entre la tige de piston de service (12) et une tête de timonerie de fremage (18)

4. Cylindre de frein selon l'une des revendications 1 à 3, **caractérisé en ce que** le piston de frein à ressort (26) est relié axialement à la tige de piston de service (12) par l'intermédiaire d'une liaison à filetage réversible (27) susceptible d'être verrouillée ou déverrouillée en rotation (cliquet 30).

5. Cylindre de frein selon l'une des revendications 1 à 4, **caractérisé en ce que** ladite surface d'appui (59) des ressorts (53) est ménagée sur un fond annulaire (37) interposé par sa périphérie et indexé en rotation entre le cylindre de service (2) et le cylindre à ressort (3).

6. Cylindre de frein selon la revendication 5, **caractérisé en ce qu'**est interposé entre le piston à ressorts (26) et le fond annulaire (37) au moins un moyen d'indexation en rotation, tel qu'une broche (55) traversant simultanément un alésage axial (56) ménagé dans le fond annulaire (37) et un alésage borgne conjugué (57) ménagé dans le piston à ressorts (26).

7. Cylindre de frein selon l'une des revendications 1 à 6, **caractérisé en ce que** chacun des ressorts hélicoïdaux (53) de ladite pluralité est disposé à au moins une extrémité dans une cavité (54) de forme générale cylindrique, par exemple ménagée dans le piston à ressort (26) ou autour d'une butée centrale (58a)

8. Cylindre de frein selon la revendication 7, **caractérisé en ce que** les cavités (54) ménagées dans le piston à ressort (26) sont réparties concentriquement à l'axe du piston à ressort (26) et régulièrement sur un cercle de la périphérie dudit piston à ressort.

9. Cylindre de frein selon l'une des revendications 1 à 8, **caractérisé en ce qu'**au moins certains des ressorts hélicoïdaux sont constitués par un ressort hélicoïdal principal (53) dans l'espace cylindrique intérieur duquel est logé un ressort hélicoïdal supplémentaire (53').

10. Cylindre de frein selon l'une quelconque des revendications 7 à 9, **caractérisé en ce que** le piston de frein à ressorts (26) contient un nombre N de cavités (54) et **en ce qu'**un nombre P de ressorts (53), avec P ≤ N, sont montés chacun dans une cavité (54) du piston à ressorts (26) entre le fond (58) de ladite cavité (54) et ladite surface d'appui (59), selon une disposition telle que la résultante des efforts axiaux de ces ressorts (53) passe sensiblement par l'axe (12a) de la tige de piston de service (12).

11. Cylindre de frein selon la revendication 10, **caractérisé en ce que** le piston de frein à ressort (26) comporte dix cavités dans lesquelles sont montés respectivement deux, ou quatre, ou six, ou huit ressorts hélicoïdaux (53) disposés symétriquement par rapport à deux plans orthogonaux, ou bien cinq ressorts hélicoïdaux (53) disposés régulièrement dans une cavité sur deux.

12. Cylindre de frein selon l'une quelconque des revendications 3 à 11, **caractérisé en ce que**, en position de desserrage du frein à ressorts, le piston à ressorts (26) est vissé sur le filetage réversible (27) de la tige de piston à ressorts (25), au moins en partie dans la zone axiale comprise entre le piston de frein de service (11) et la surface d'appui (59) des ressorts (53).

## Patentansprüche

1. Bremszylinder mit:
- einem Betriebsbremszylinder (2),
- einem im Betriebsbremszylinder (2) eingebauten Betriebsbremskolben (11), der mit einer Betriebskolbenstange (12) fest verbunden ist,
- einem Federbremszylinder (3), der koaxial am Betriebsbremszylinder (2) montiert ist und das Lösen der Federbremse erlaubt,
- einem ringförmigen Federbremskolben (26), der im Federbremszylinder (3) auf der Betriebskolbenstange (12) montiert ist, um an letztere eine Federbremskraft zu übertragen,
- einer Mehrzahl von Federn (53), die um die Betriebskolbenstange (12) herum angeordnet sind, und zwar zwischen dem Federkolben (26) und einer Stützfläche (59), die fest verbunden ist mit der Gesamtanordnung (1), welche durch den Betriebsbremszylinder (2) und den hierzu koaxial eingebauten Federbremszylinder (3) gebildet ist, **dadurch gekennzeichnet, dass** der Bremszylinder einen Zusatzzylinder (4) zum Lösen der Federbremse aufweist, der mit einem ringförmigen Lösezusatzkolben (50) versehen ist, dessen Lösekolbenstange in Form einer Ringmuffe (49) zwischen dem Boden (46) des Federbremszylinders (3) und der Federkolbenstange (25) beweglich und dicht aufgenommen ist, um sich auf dem ringförmigen Federhauptkolben (26) ringförmig abzustützen, wenn ein Lösedruck auf den Lösezusatzkolben (50) wirkt.

2. Bremszylinder nach Anspruch 1, **dadurch gekennzeichnet, dass** der Lösezusatzzylinder (4) an seinem Umfang axiale Montagebohrungen (8) mit Gewinde aufweist, während der Federzylinder (3) und der Betriebsbremszylinder (2) an ihrem Umfang axiale Durchgangsbohrungen (7, 6) aufweisen, die den mit Gewinde versehenen Montagebohrungen (8) entsprechen und in denen jeweils eine Schraube (5) zum axialen Zusammenbau der drei Zylinder (2, 3, 4) in der Weise montiert ist, dass sie in eine der mit Gewinde versehenen Montagebohrungen (8) eingeschraubt ist und sich am Umfang der Außenseite der axialen Durchgangsbohrung (6) des Betriebsbremszylinders (2) abstützt.

3. Bremszylinder nach Anspruch 1 oder 2, **dadurch gekennzeichnet, dass** zwischen der Betriebskolbenstange (12) und einem Bremsgestängekopf (18) ein Organ (16, 13) zum Einstellen des Spiels zwischengeschaltet ist.

4. Bremszylinder nach einem der Ansprüche 1 bis 3, **dadurch gekennzeichnet, dass** der Federbremskolben (26) in Axialrichtung mit der Betriebskolbenstange (12) über eine Verbindung mit umkehrbarem Gewinde (27) verbunden ist, die in Drehrichtung verriegelt oder entriegelt werden kann (Klinke 30).

5. Bremszylinder nach einem der Ansprüche 1 bis 4, **dadurch gekennzeichnet, dass** die Stützfläche (59) der Federn (53) auf einem Ringboden (37) ausgebildet ist, der mit seinem Umfang zwischen dem Betriebsbremszylinder (2) und dem Federzylinder (3) angeordnet ist und zwischen diesen beiden Zylindern in Drehung versetzt wird.

6. Bremszylinder nach Anspruch 5, **dadurch gekennzeichnet, dass** zwischen dem Federkolben (26) und dem Ringboden (37) wenigstens eine Drehmitnehmereinrichtung angeordnet ist, zum Beispiel ein Dorn (55), der eine im Ringboden (37) ausgebildete axiale Bohrung (56) und gleichzeitig ein zugeordnetes Sackloch (57) durchdringt, das im Federkolben (26) ausgebildet ist.

7. Bremszylinder nach einem der Ansprüche 1 bis 6, **dadurch gekennzeichnet, dass** jede der Mehrzahl von Schraubenfedern (53) an wenigstens einem Ende in einer im wesentlichen zylindrischen Ausnehmung (54) angeordnet ist, die zum Beispiel im Federkolben (26) oder um einen zentralen Anschlag (58a) herum ausgebildet ist.

8. Bremszylinder nach Anspruch 7, **dadurch gekennzeichnet, dass** die im Federkolben (26) ausgebildeten Ausnehmungen (54) konzentrisch zur Achse des Federkolbens (26) und regelmäßig auf einem Kreis des Umfangs des Federkolbens verteilt sind.

9. Bremszylinder nach einem der Ansprüche 1 bis 8, **dadurch gekennzeichnet, dass** wenigstens bestimmte der Schradbenfedern jeweils durch eine Hauptschraubenfeder (53) gebildet sind, in deren zylindrischem Innenraum eine Zusatzschraubenfeder (53') angeordnet ist.

10. Bremszylinder nach einem der Ansprüche 7 bis 9, **dadurch gekennzeichnet, dass** der Federbremskolben (26) eine Anzahl N von Ausnehmungen (54) enthält und dass eine Anzahl P von Federn (53), mit P≤N, in je einer Ausnehmung (54) des Federkolbens (26) zwischen dem Boden (58) der Ausnehmung (54) und der Stützfläche (59) montiert sind, und zwar in einer solchen Anordnung, dass die Resultierende der Axialkräfte dieser Federn (53) im wesentlichen durch die Achse (12a) der Betriebskolbenstange (12) verläuft.

11. Bremszylinder nach Anspruch 10, **dadurch gekennzeichnet, dass** der Federbremskolben (26) zehn Ausnehmungen aufweist, in denen zwei oder vier oder sechs oder acht Schraubenfedern (53), symmetrisch angeordnet bezüglich zweier orthogonaler Ebenen, oder fünf Schraubenfedern (53), regelmäßig in jeder zweiten Ausnehmung angeordnet, montiert sind.

12. Bremszylinder nach einem der Ansprüche 3 bis 11, **dadurch gekennzeichnet, dass** im gelösten Zustand der Federbremse der Federkolben (26) auf dem umkehrbaren Gewinde (27) der Federkolbenstange (25) zumindest teilweise in dem Axialbereich, der zwischen dem Betriebsbremskolben (11) und der Stützfläche (59) der Federn (53) liegt, aufgeschraubt ist.

## Claims

1. A brake cylinder comprising:
- a service brake cylinder (2),
- a service brake piston (11) mounted in the service brake cylinder (2) and integral with a service brake piston rod (12),
- a spring brake cylinder (3) mounted coaxially on the service brake cylinder (2), for releasing a spring brake,
- a spring brake annular piston (26) mounted in the said spring brake cylinder (3) and on said service brake piston rod (12), for transmitting a spring brake braking force to the latter,
- a plurality of springs (53) arranged around said service brake piston (12), between said spring brake piston (26) and an abutment surface (59) integral with the assembly (1) formed from said service brake cylinder (2) and said spring brake cylinder (3) assembled coaxially **characterised in that** it comprises a supplementary spring brake release cylinder (4) fitted with an additional annular brake-release piston (50) the brake release piston rod of which is movably housed, and in a sealed manner, in the form of an annular sleeve (49), between the bottom (46) of said spring brake cylinder (3) and said spring brake piston rod (25), in order to come into annular abutment with the annular main spring brake piston (26) under the effect of a brake release pressure acting on said supplementary brake-release piston (50.

2. The brake cylinder according to claim 1, **characterised in that** said supplementary brake-release cylinder (4) carries at the periphery thereof, threaded axial assembly holes (8), while said spring brake cylinder (3) and said service brake cylinder (2) have, at their periphery, axial through holes (7, 6) corresponding to said axial threaded assembly holes (8) and in each one of which an axial assembly screw (5) for said three cylinders (2, 3, 4) is mounted, screwed into one of said threaded assembly holes (8) and abutting on the periphery, at the external side, of said axial through hole (6) in the service brake cylinder (2).

3. The brake cylinder according to claim 1 or 2, **characterised in that** a slack adjustment member (16, 13) is fitted between said service brake piston rod (12) and a brake rigging head (18).

4. The brake cylinder according to one of claims 1 to 3, **characterised in that** said spring brake piston (26) is axially linked to said service brake piston rod (12) via a linkage having a reversible thread (27) able to be locked or unlocked in rotation (ratchet 30).

5. The brake cylinder according to one of claims 1 to 4, **characterised in that** said abutment surface (59) for springs (53) is provided on an annular base (37) interposed by means of its periphery, and keyed to prevent rotation, between the said service brake cylinder (2) and said spring brake cylinder (3).

6. The brake cylinder according to claim 5, **characterised in that** keying means for preventing rotation are interposed between said spring brake piston (26) and said annular base (37), said keying means being for example a pin (55) that simultaneously passes through an axial bore (56) provided in said annular base (37) and a matching blind hole (57) provided in said spring brake piston (26).

7. The brake cylinder according to one of claims 1 to 6, **characterised in that** each one of the helical springs (53) of said plurality is arranged at at least one end in a cavity (56) of a generally cylindrical shape, for example formed in the said spring brake piston (26) or around a central abutment (58a).

8. The brake cylinder according to claim 7, **characterised in that** the cavities (54) provided in said spring brake piston (26) are arranged concentrically with respect to an axis of said spring brake piston (26) and are equally distributed on a circle of the periphery of said spring brake piston.

9. The brake cylinder according to one of claims 6 to 8, **characterised in that** at least part of said plurality of helical springs is constituted by a main helical spring (53) inside the inner cylindrical space of which a supplementary helical spring (53') is housed.

10. The brake cylinder according to any one of claims 7 to 9, **characterised in that** said spring brake piston (26) contains a number N of cavities (54) and **in that** a number P of springs (53), where P ≤ N, are each mounted in a cavity (54) of said spring brake piston (26) between the bottom (58) of said cavity (54) and said abutment surface (59), in an arrangement such that the resultant of the axial forces of said springs (53) passes substantially along the axis (12a) of said service brake piston rod (12).

11. The brake cylinder according to claim 10, **characterised in that** said spring brake piston (26) includes ten cavities in which are mounted respectively, two, or four, or six, or eight helical springs (53) arranged symmetrically with respect to two orthogonal planes, or alternatively, five helical springs (53) arranged regularly in alternate cavities.

12. The brake cylinder according to any one of claims 3 to 11, **characterised in that**, in the position of release of the spring brake, the spring brake piston (26) is screwed on the reversible thread (27) of the spring brake piston rod (25), at least in part in the axial region comprised between the service brake piston (11) and the abutment surface (59) of the springs (53).
